# EUROPEAN PATENT SPECIFICATION

(11) **EP 4 396 408 B1**
(45) Date of publication and mention of the grant of the patent: **19.08.2026**
(21) Application number: 22773014.0
(22) Date of filing: 31.08.2022
(51) Int. Cl.: D21H 17/04, B65D 65/38, D21H 17/06, D21H 17/14, D21H 27/10

(54) **OLEOPHILIC CELLULOSIC AND/OR LIGNOCELLULOSIC FIBRES, A COMPOSITION AND A PRODUCT COMPRISING THE SAME, A METHOD OF PREPARING THE SAME, AND USES OF THE SAME**
OLEOPHILE CELLULOSE- UND/ODER LIGNOCELLULOSEFASERN, EINE ZUSAMMENSETZUNG UND EIN PRODUKT, DIE DIESE ENTHALTEN, EIN VERFAHREN ZU IHRER HERSTELLUNG UND IHRE VERWENDUNG
FIBRES CELLULOSIQUES ET/OU LIGNOCELLULOSIQUES OLEOPHILES, COMPOSITION ET PRODUIT COMPRENANT CES FIBRES, LEUR PROCEDE DE PREPARATION ET LEUR UTILISATION

(30) Priority: 31.08.2021 FI 20215907
(43) Date of publication of application: 10.07.2024
(73) Proprietor: Metsä Fibre Oy, 02020 Metsä (FI)
(72) Inventor: SUURNÄKKI, Anna, 02020 Metsä (FI); VÄNSKÄ, Emilia, 02020 Metsä (FI)
(74) Representative: Laine IP Oy
(86) International application number: PCT/FI2022/050569
(87) International publication number: WO 2023/031519

(56) References cited:
- WO-A1-2014/059121
- WO-A1-2020/154578

## Description

### FIELD

The present invention relates to cellulosic and lignocellulosic fibres, and particularly to fibres exhibiting oleophilic properties for example in fibre networks.

### BACKGROUND

Conventionally oil and grease resistant cellulosic fibre-based materials or products, such as packaging materials are produced via coating or laminating a surface of a fibrous substrate with oleophobic materials, such as water-based barrier coatings or plastic films. In this approach, the barrier properties will be at an acceptable level only when the coating is relatively thick. Multiple coatings may be required to maintain a sufficient barrier on the cellulosic surface due to the high porosity of the cellulosic substrate, which results in increased costs.

An additional disadvantage of such separate coating layers is that inadequate bonding force between the coating and the substrate may lead to defects.

Further, the coated material or product imposes challenges to subsequent converting and recycling processes.

A further disadvantage is that a separate coating station or line may need to be incorporated into the manufacturing process. The use of such as separate coating station may increase manufacturing costs and slow down the manufacturing process.

Coated materials may suffer from problems due to shrinking of the coating. This problem may be particularly pertinent in case of bio-based coatings. Such shrinking may lead to deterioration of barrier properties.

It is known that cellulosic and lignocellulosic fibres may exhibit a certain oil sorption capability by nature, and this oil sorption or up-take capacity may be increased by various mechanical and chemical treatments, see for example Payne K.C. et al., "Oil spills abatement: factors affecting oil uptake by cellulosic fibers", Environ. Sci. Technol. 2012, 46(14), pp. 7725 - 7730, and Wong et al., "Impact of Fiber Treatment on the Oil Absorption Characteristics of Plant Fibers", Bioresources, June 2016, pp. 6452 - 6463. Such oil up-take property may be due to both the inherent cellulose fibre structure and the presence of free hydroxyl groups in the cellulosic fibres. This property is utilized for example in oil spill recovery where effective sorption of oil and simultaneous prevention of its escape from the sorbent is needed.

In WO2014/059121 A1, methods for making and using aqueous dispersions for imparting grease/oil resistance to paper, paperboard and cellulose fiber products generally are provided. In particular, there are provided aqueous colloidal dispersions comprising nanoparticles of at least one colloidal clay and an aqueous fluorochemical, which can be applied to paper, paperboard and cellulose fiber products.

WO2020/154578 A1 describes methods of treating fibrous cellulosic materials with sucrose fatty acid ester containing particles that allow for modifications of surfaces, including making such surfaces water resistant and/or oil/grease resistant.

It is an aim of the present invention to overcome at least part of the disadvantages in the known technology.

### SUMMARY OF THE INVENTION

The invention is defined by the features of the independent claims. Some specific embodiments are defined in the dependent claims.

According to a first aspect of the present invention, there are provided oleophilic cellulosic and/or lignocellulosic fibres, wherein the oleophilic cellulosic and/or lignocellulosic fibres are capable of retarding oil and/or grease migration.

According to a second aspect of the present invention, there is provided a composition comprising the oleophilic cellulosic and/or lignocellulosic fibres according to the first aspect. Preferably the composition is a suspension, a slurry, a foam, a dispersion, a solution, a solid mixture, a dry powder, or a granular composition, in one example a pulp.

Various embodiments of the first aspect or the second aspect may comprise one or more features from the following bulleted list:
- The oleophilic cellulosic and/or lignocellulosic fibres are capable of retarding oil and/or grease migration in a fibre network.
- The fibres have been obtained by modifying cellulosic and/or lignocellulosic fibres, such as wood pulp, to increase their ability to interact with oil and/or attract oil.
- The fibres have been obtained by modifying cellulosic and/or lignocellulosic fibres to increase their oleophilicity in comparison to unmodified cellulosic and/or lignocellulosic fibres, such as in comparison to unmodified cellulosic and/lignocellulosic fibres obtained from a pulping process.
- The fibres are in the form of a fibre network or form at least a part of a fibre network.
- Said retarding comprises retarding oil migration in said fibre network or said at least part of a fibre network.
- Said oil and/or grease comprises oil, fat and/or grease, such as animal oil, vegetable oil, petrochemical oil or any mixture thereof.
- Said oleophilic fibres carry oleophilic functional groups.
- At least part of said oleophilic functional groups is located on surfaces of the fibres, and preferably also as incorporated into the fibres.
- The oleophilic functional groups are covalently attached to the fibres.
- The oleophilic functional groups are selected from the group: hydrocarbons and/or hydrocarbon compounds and/or hydrocarbon derivatives, which may be unsaturated or saturated, straight-chain or branched or cyclic, and may have functional groups, for example vinyl, alcohol, aldehyde, carboxylic acid, halide as well as ionic and or non-ionic functional groups; polymers and their derivatives, such as polyolefins, polyols, polyelectrolytes, polypeptides, polysaccharides and oligomers and/or monomers thereof; low molecular weight compounds, such as amino acids, phenolics, fatty acids, alcohols, for example, glycerol, propylene glycol; organic and inorganic minerals and mineral derivatives, such as calcium carbonate, talc, kaolin, silane, siloxane, chitin or chitosan; and any combinations thereof.
- The oleophilic functional groups comprise one or more of the following: hydrocarbons, which may be unsaturated or saturated, straight-chain or branched or cyclic, terminal groups, for example vinyl, alcohol, aldehyde, halide or fatty acid groups, esters, such as monoesters or polyesters, of short-chain alcohols and fatty acids, for example glycerol, propylene glycol, triglycerides, oleophilic minerals, and any combinations thereof.
- Said capability of the fibres to retard oil and/or grease migration is such that if, for the purpose of testing said capability, the oleophilic fibres are placed in a fibrous matrix consisting of said oleophilic fibres and oil, for example rapeseed oil, in a relative amount of at least 1 g oil per 1 g dry fibres, such as 1 to 3 g oil per 1 g dry fibres, the leaking rate of oil out of the fibrous matrix is at least 50% smaller, such as at least 80% smaller than the leaking rate of oil out of a corresponding fibrous matrix consisting of unmodified fibres and oil.
- Said capability of the fibres to retard oil and/or grease migration is such that if, for the purpose of testing said capability, the oleophilic fibres are placed in a fibrous matrix consisting of said oleophilic fibres and oil, for example rapeseed oil, in a relative amount of at least 1 g oil per 1 g dry fibres, such as 1 to 3 g oil per 1 g dry fibres, the leaking rate of oil out of the fibrous matrix is less than 0.3 g leaked oil per 1 g dry fibres during a period of 20 min.

According to a third aspect of the present invention, there is provided a product comprising oleophilic cellulosic and/or lignocellulosic fibres, wherein the oleophilic cellulosic and/or lignocellulosic fibres are capable of retarding oil and/or grease migration.

According to a fourth aspect of the present invention, there is provided a product comprising oleophilic cellulosic and/or lignocellulosic fibres, wherein the oleophilic cellulosic and/or lignocellulosic fibres are capable of retarding leaking of oil and/or grease out of the product, preferably as a result of interaction between the oleophilic cellulosic and/or lignocellulosic fibres and the oil and/or grease.

Various embodiments of the third or fourth aspect may comprise one or more features from the following bulleted list:
- Said capability of the fibres to retard oil migration or leaking is such that if, for the purpose of testing said capability, the oleophilic fibres are placed in a fibrous matrix consisting of said oleophilic fibres and oil, for example rapeseed oil, in a relative amount of at least 1 g oil per 1 g dry fibres, such as 1 to 3 g oil per 1 g dry fibres, the leaking rate of oil out of the fibrous matrix is at least 20% smaller, such as at least 50% smaller than the leaking rate of oil out of a corresponding fibrous matrix consisting of unmodified fibres and oil.
- Said capability of the fibres to retard oil migration or leaking is such that if, for the purpose of testing said capability, the oleophilic fibres are placed in a fibrous matrix consisting of said oleophilic fibres and oil, for example rapeseed oil, in a relative amount of at least 1 g oil per 1 g dry fibres, such as 1 to 3 g oil per 1 g dry fibres, the leaking rate of oil out of the fibrous matrix is less than 0.3 g leaked oil per 1 g dry fibres during a period of 20 min.
- The product is a substantially planar product, such as a film, a fibrous surface layer, a web, a sheet, a tissue, a board, or a three-dimensional product, such as a three-dimensional moulded fibrous product, or a substantially one-dimensional product, such as a yarn or a filament.
- The product is in the form of a wet-laid fibrous product, an air-laid fibrous product, a foam-formed fibrous product, or a moulded fibrous product.
- The product is in the form of a fibrous surface layer.
- The product is a multi-layered product, and the oleophilic cellulosic fibres are confined to one or more layers of a multi-layered product, such as to a surface layer of a multi-layered paperboard structure.
- The oleophilic cellulosic fibres are distributed throughout the structure of the product, such as throughout the structure of a three-dimensional moulded fibrous product.
- The product is a food packaging or wrapping, such as a fast-food packaging or wrapping.

According to a fifth aspect of the present invention, there is provided a method of preparing oleophilic cellulosic and/or lignocellulosic fibres, the method comprising the following steps: providing cellulosic and/or lignocellulosic fibres; modifying the cellulosic and/or lignocellulosic fibres to increase their oleophilicity; wherein the modified fibres are capable of retarding oil and/or grease migration.

Various embodiments of the fifth aspect may comprise one or more features from the following bulleted list:
- Said providing comprises providing cellulosic and/or lignocellulosic wood pulp fibres, preferably in the form of wood pulp from chemical pulping, chemithermomechanical pulping, semi-chemical pulping or mechanical pulping.
- Said modifying comprises covalent and/or non-covalent modification.
- Said modifying comprises modifying at least part of the fibres by attaching oleophilic functional groups to the fibres.
- Before said modifying step the fibres are pre-treated by swelling the fibres in a solvent or by fibrillating the fibres, for example to increase the surface area of the fibres.
- Said modifying is carried out in a solvent system comprising water, alkaline substance, acid, ionic liquid, deep eutectic solvent, or organic solvent, or any mixture thereof.

According to a sixth aspect of the present invention, there is provided a method comprising: providing a fibrous raw material comprising oleophilic cellulosic and/or lignocellulosic fibres, and optionally unmodified cellulosic and/or lignocellulosic fibres; shaping, such as forming, a fibrous structure comprising said fibrous raw material; and drying said fibrous structure to obtain a fibrous product.

Various embodiments of the sixth aspect may comprise one or more features from the following bulleted list:
- Said fibrous raw material is in the form of a flowable fibrous raw material, such as a fibrous slurry, a fibrous slush, or a fibrous foam.
- Said forming comprises wet forming or foam forming.
- Said forming comprises a paper or paperboard making method.
- The oleophilic cellulosic and/or lignocellulosic fibres are capable of retarding leaking of oil and/or grease out of the product.
- The oleophilic cellulosic and/or lignocellulosic fibres are capable of retarding leaking of oil and/or grease out of the product as a result of interaction between the oleophilic cellulosic and/or lignocellulosic fibres and the oil and/or grease.
- The oleophilic cellulosic and/or lignocellulosic fibres are in a fibre network and are capable of retarding leaking of oil and/or grease out of the product.

According to a seventh aspect of the present invention, there is provided use of the oleophilic cellulosic and/or lignocellulosic fibres according to the first aspect in a product for food serving, food packaging, food storing or food preparing, or in a fibrous material for manufacturing such a product.

According to an eighth aspect of the present invention, there is provided use of the oleophilic cellulosic and/or lignocellulosic fibres according to the first aspect in fibrous packaging or wrappings, non-woven products, textile products, tissue products or filtering products.

### Advantages of the invention

The present invention may provide many advantages in cellulosic and/or lignocellulosic fibre-based materials, fibrous surface layers and products which in their use become exposed to oil and/or grease or substances containing oil and/or grease.

The present invention may provide advantages in fibrous packaging, non-woven products, textile products, tissue products, filtering products and various food wrapping materials.

The present invention may provide new fibrous materials which are aimed at retarding oil migration by such interaction between the fibres and oil that does not involve complete sorption or retaining of the oil into the fibrous material or matrix.

Oil and grease retarding properties of the present cellulosic and/or lignocellulosic fibre-based material may be maintained even in the case of fracture of eventual surface coating layers, preferably/typically in case of packaging materials, for example paperboard materials.

According to the present invention, the amount of eventual coating material and the number of process steps may be reduced, which may decrease the costs of the final product, preferably or typically in case of packaging materials, for example paperboard materials, moulded fibre product materials and/or wrapping materials.

The present oleophilic fibres and compositions may replace fossil based coating materials or reduce their use.

The present invention may provide improved recyclability of fibre-based materials due to reduced amount of plastics.

The present fibres, compositions and products may be biodegradable or degradable in nature.

The present oleophilic fibres or compositions may reduce problems due to inadequate binding between coating and fibre material thus reducing the defects.

### BRIEF DESCRIPTION OF DRAWINGS

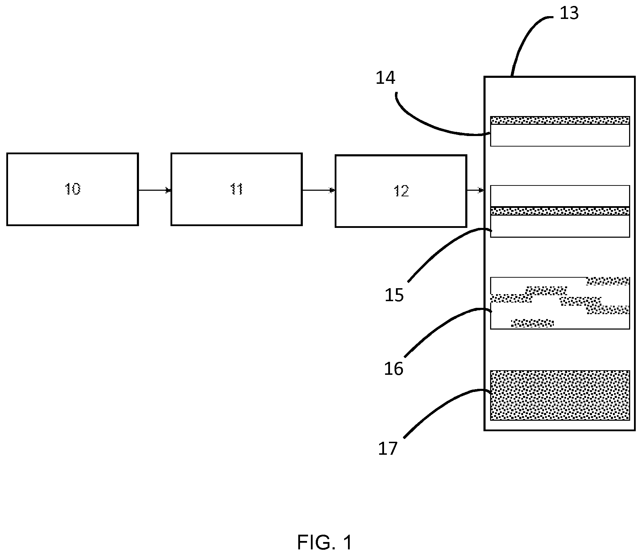

FIGURE 1 shows a process flow chart for producing fibrous products incorporating oleophilic cellulosic and/or lignocellulosic fibres in accordance with an embodiment of the present invention.

### EMBODIMENTS

### DEFINITIONS

In the present context, the term "oleophilic" refers to those surfaces or materials which are attracted to and wettable with oil and/or grease, as distinguished from "oleophobic" wherein the surfaces are not so attracted or wetted with oil and/or grease.

Typically, "oleophilic material" refers to materials that are capable of substantially or at least partially retarding oil and/or grease transfer or oil and/or grease migration, preferably even in elevated humidity or an aqueous environment. In other words, "oleophilic material" refers to oleophilic, oil and/or grease retarding material.

In the present context, the term "oleophilic material" typically refers to a material which has been modified to exhibit a higher affinity for oil and/or grease and/or for substances containing oil and/or grease than for other materials or components.

The term "oleophilic fibres" may refer to the combination of fibres and oleophilic material or groups, which combination has been obtained by a modification process of the fibres.

Preferably, the oleophilic cellulosic and/or lignocellulosic fibres are cellulosic and/or lignocellulosic fibres the oleophilicity of which has been increased by a modification process in comparison to unmodified cellulosic and/or lignocellulosic fibres.

In the present context, oleophilicity relates to interaction and affinity towards oil and/or grease. The term as such does not imply any particular capability to interact with other, for example non-oily substances.

In the present context, the term "unmodified fibres" refers to fibres that have not been modified to become oleophilic.

In the present context, the term "unmodified fibres" typically refers to fibres that have not undergone any chemical treatment or any impregnation or absorption process or any physical treatment or any separation process which would be primarily aimed at making the fibres oleophilic or at providing oleophilic fibres.

The term "oleophilic fibres" may refer to fibres that have undergone a chemical treatment or an impregnation or absorption process or a physical treatment or a separation process which is primarily aimed at making the fibres oleophilic or at providing oleophilic fibres.

In the present context, the term "oil migration" refers to transfer of oil and/or grease in a matrix, such as a fibrous matrix, in any direction. Typically the migration involves movement or transfer with a finite, possibly varying speed.

In the present context, the term "retarding" refers to the capability of a fibrous composition, especially of the fibres, to slow down the migration or transfer of oil and/or grease in, within and/or through a two-dimensional or three-dimensional matrix, such as a fibrous matrix or material. Such capability may comprise capability of the fibres to attract oil and/or grease to the vicinity of, on surfaces of and/or into the fibres.

The term "retarding" typically does not refer to retaining the oil and/or grease or stopping transfer or migration of oil and/or grease.

Preferably, "retarding" does not consist of mere sorption or may even not involve any sorption. Essentially "retarding" refers to slowing down of migration.

In order to overcome at least part of the above-discussed shortcomings of known fibre-based products such as packages where oil and grease penetration is undesirable, a solution based on novel cellulosic and/or lignocellulosic fibres exhibiting oil and/or grease retarding properties is presented. Additionally, methods for the preparation of such fibres is presented.

In some embodiments, it has been observed that by modifying cellulosic and/or lignocellulosic fibres, it may be possible to achieve fibres that exhibit oil retarding properties.

The fibres to be modified may be any cellulosic or lignocellulosic fibres, for example cellulosic or lignocellulosic pulp fibres, such as unbleached or bleached fibres from chemical and/or mechanical pulping, recycled fibres, broke fibres, or pulping by-products, or combinations thereof.

In one embodiment, the fibres to be modified comprise mechanical pulp, semi-chemical pulp, chemical pulp, thermomechanical pulp, chemithermomechanical pulp or recycled pulp.

The fibres to be modified may be in the form of any pulp composition, for example in the form of unfractionated or fractionated cellulosic and/or lignocellulosic pulp.

In one embodiment, the pulp may be made from any broad-leaved tree such as a tree from the betulaceae family, for example birch or aspen, from the salicaceae family, from eucalyptus, mixed tropical hardwood or pines or from any combination of the aforementioned. The pulp may be also made from any conifer such as spruce or pine or from any combination thereof. The pulp may be also made from a combination of broad-leaved trees and conifers.

In one embodiment, the pulp may be made from any annual such as straw, common reed, reed canary grass, bamboo, sugarcane, bagasse or any grass plant.

It is advantageous that the cellulosic and/or lignocellulosic fibres to be modified are provided in the form of wood pulp, preferably selected from the following group: chemical pulp, mechanical pulp and mixtures thereof.

In one embodiment, the length weighted average fibre length of the oleophilic cellulosic and/or lignocellulosic fibres is in one example at least 0.5 mm, in another example less than 10 mm, such as 0.5 to 5 mm, for example 1 to 5 mm.

The present invention may provide fibres, fibrous compositions and products, such as fibre-based packagings, which are useful in applications in which oil and grease retarding properties are required of a fibrous matrix.

In some embodiments, the present oleophilic fibrous material behaves in the following way: The oleophilic fibres are substantially evenly distributed in a suitable matrix, or alternatively confined to reside in a discrete layer or layers in a matrix. The fibres will attract oily or greasy substances and slow down their penetration through the matrix or the layer. In one example the matrix incorporating the fibres is paperboard.

In one embodiment, oil and/or grease retarding fibres are prepared by attaching oleophilic substances or functional groups to the fibres, such as on fibre surfaces. The modification may be carried out in water or in other solvent systems, such as organic solvents or novel solvents including but not limited to ionic liquids (ILs) or deep eutectic solvents (DES). Furthermore, the modification may include a physical or chemical treatment, such as refining or any other mechanical process, increasing the accessible surface area of the fibres, or any combination thereof.

Preferably, the goal of the present fibre modification process is, on one hand, to introduce a suitable oleophilic functionality to the fibres and, on the other hand, to maintain a sufficient inter-fibre bonding ability of the fibres, for example in view of papermaking processes.

A fibrous matrix with oil and/or grease retarding fibres may be formed for example on a web structure or in a mould.

The oleophilic pulp fibres may be used in a fibre matrix or in a part of a fibre matrix, for example in fibrous layers, in various processes producing fibre-based products such as packaging materials or in processes employing fibre-based materials.

Due to the interaction of the modified fibres with oil and/or grease, the migration speed of the oil or grease through the cross-section of the fibre matrix can be reduced.

The present invention also concerns a composition comprising oleophilic cellulosic and/or lignocellulosic fibres, wherein the fibres are capable of retarding oil and/or grease migration.

As discussed above, by 'capability to retard' we refer to the ability of the fibres to interact with oil or grease in such a way that its penetration in, within and/or through the matrix in which the fibres lie or which the fibres form proceeds slower than would be the case with corresponding unmodified fibres. Such a retarding property typically stems from added functional groups or adsorbed molecules, compounds or particles, which are not inherently present in cellulosic or lignocellulosic fibres, such as in fibres originating from commonly used wood pulping processes. Thus, oleophilicity of the fibres has been increased.

The retarding capability of the fibres may be quantified or determined by measuring the amount of oil, such as rapeseed oil, leaking or becoming released from a matrix comprising the fibres during a certain period of time. The matrix may consist of the fibres and the oil. The matrix may be prepared for example in the form of a sheet or a three-dimensional structure.

By means of the present invention, a ten-fold decrease in oil leaking rate from a fibrous matrix may be achieved.

In some embodiments, the oil leaking rate from the part of a fibrous product or a fibrous matrix incorporating the oleophilic cellulosic and/or lignocellulosic fibres may become reduced by at least 10%, such as at least 20%, such as at least 30%, for example at least 50%, when using the present oleophilic cellulosic and/or lignocellulosic fibres instead of unmodified cellulosic and/or lignocellulosic fibres as the main fibrous component, or as the sole fibrous component, of said part product.

The retarding capability of the fibres may be determined for example gravimetrically or by any other suitable method.

In some embodiments, the retarding capability of the fibres is such that if, for the purpose of testing said capability, the oleophilic fibres are placed in a fibrous matrix consisting of the oleophilic fibres and oil, such as rapeseed oil, in a relative amount of at least 1 g oil per 1 g dry fibres, such as 1 to 3 g oil per 1 g dry fibres, the leaking rate of oil out of the fibrous matrix may be at least 20% smaller, such as at least 50% smaller, such as at least 80% smaller than the leaking rate of oil out of a corresponding fibrous matrix consisting of unmodified fibres and oil.

In one embodiment, the retarding capability of the fibres is such that if, for the purpose of testing said capability, the oleophilic fibres are placed in a fibrous matrix consisting of the oleophilic fibres and oil, such as rapeseed oil, in a relative amount of at least 1 g oil per 1 g dry fibres, such as 1 to 3 g oil per 1 g dry fibres, the leaking rate of oil out of the fibrous matrix may be less than 0.3 g leaked oil per 1 g dry fibres during a period of 20 min. Preferably, the oil leaking rate is less than 0.1 g leaked oil per 1 g dry fibres during a period of 20 min, such as less than 0.01 g leaked oil per 1 g dry fibres during a period of 20 min.

Said oil may comprise for example animal oil, vegetable oil, petrochemical oil or any other oil- or fat-type substance, or any mixtures thereof or derivatives thereof or compositions comprising said oils. Thus, said oil may comprise also other components, such as pigments.

In some embodiments, said oil may comprise non-polar oils, such as hydrocarbons.

In some embodiments, said oil may comprise polar oils, such as fatty alcohols, esters or triglycerides.

Typically, the oleophilicity of the fibres is the result of a modification process.

The modification may comprise covalent or non-covalent modification of cellulosic and/or lignocellulosic fibres.

In the present invention, the oleophilic fibres carry oleophilic functional groups.

Typically, the oleophilic functional groups are such groups that are not present or accessible to oil and/or grease in unmodified cellulosic or lignocellulosic fibres to any substantial extent.

An advantage of covalently attaching oleophilic functional groups to the fibres is that said modification is more permanent in nature than non-covalent modification.

As a result of the modification, oily substances penetrating the fibrous matrix or migrating within the fibrous matrix may become attracted to the vicinity of the oleophilic fibres and their migration speed may become decreased.

Advantageously at least part of said oleophilic functional groups is located on surfaces of the fibres, and preferably also as incorporated into the fibres.

In one embodiment, said oleophilic functional groups is confined to the surface part of the fibres which accounts for less than 50% of the total thickness of the fibre.

In the present invention, the modification comprises attaching oleophilic functional groups to the fibres.

The oleophilic functional groups may comprise organic and/or inorganic compounds and/or organic and/or inorganic particles selected from the following:
a) hydrocarbons and/or hydrocarbon compounds and/or hydrocarbon derivatives, which may be unsaturated or saturated, straight-chain or branched or cyclic, and may have functional groups, for example vinyl, alcohol, aldehyde, carboxylic acid, halide as well as ionic and or non-ionic functional groups;
b) polymers and their derivatives, such as polyolefins, polyols, polyelectrolytes, polypeptides, polysaccharides and oligomers and/or monomers thereof;
c) low molecular weight compounds, such as amino acids, phenolics, fatty acids, alcohols, for example, glycerol, propylene glycol;
d) organic and inorganic minerals and mineral derivatives, such as calcium carbonate, talc, kaolin, silane, siloxane, chitin or chitosan; and
any combinations thereof.

In one embodiment, the oleophilic functional groups are selected among: hydrocarbons and/or hydrocarbon compounds and/or hydrocarbon derivatives, which may be unsaturated or saturated, straight-chain or branched or cyclic, and may have functional groups, for example vinyl, alcohol, aldehyde, carboxylic acid, halide as well as ionic and or non-ionic functional groups, and any combinations thereof.

In one embodiment, the oleophilic functional groups are selected among hydrocarbons and hydrocarbon derivatives, such as hydrocarbons carrying functional groups, and any combinations thereof.

In one embodiment, the oleophilic functional groups are selected among: polymers and their derivatives, such as polyolefins, polyols, polyelectrolytes, polypeptides, polysaccharides and oligomers and/or monomers thereof, and any combinations thereof.

In one embodiment, the oleophilic functional groups are selected among: low molecular weight compounds, such as amino acids, phenolics, fatty acids, alcohols, for example, glycerol, propylene glycol, and any combinations thereof.

In one embodiment, the oleophilic functional groups are selected among: organic and inorganic minerals and mineral derivatives, such as calcium carbonate, talc, kaolin, silane, siloxane, chitin or chitosan, and any combinations thereof.

The oleophilic functional groups may comprise but are not limited to the following: hydrocarbons, which may be unsaturated or saturated, straight-chain or branched or cyclic, terminal groups, for example vinyl, alcohol, aldehyde, halide or fatty acid groups, esters, such as monoesters or polyesters, of short-chain alcohols and fatty acids, for example glycerol, propylene glycol, triglycerides, oleophilic minerals, polyelectrolytes, and any combinations thereof.

In one embodiment, the oleophilic functional groups comprise fatty acids or esters of alcohols and fatty acids.

In one embodiment, the oleophilic functional groups comprise hydrocarbons.

While the oleophilic functionality is preferably tied with surface parts of surface layer of the fibres, even inner parts of the fibres may carry oleophilic functional groups. In one example, oleophilic functional groups are present substantially through at least 50% of the thickness of the fibres, such as through the entire thickness of the fibres.

The fibrous composition may have any suitable form. For example, the fibrous composition may consist of the modified fibres and optionally a liquid matrix.

In some embodiments, the composition may be in the form of a suspension, a slurry, a foam, a dispersion, a solution, a solid mixture, a dry powder, or a granular composition comprising modified fibres.

The present invention also provides a product comprising oleophilic cellulosic and/or lignocellulosic fibres wherein the fibres have been modified to achieve ability to retard oil migration.

The present oleophilic cellulosic and/or lignocellulosic fibres may be used in manufacturing fibrous products.

Typically, the oleophilic cellulosic and/or lignocellulosic fibres are used as a fibrous raw material that is fed to a manufacturing process of a fibrous product, for example the oleophilic cellulosic and/or lignocellulosic fibres are fed before carrying out a shaping or forming step. In an embodiment, the oleophilic cellulosic and/or lignocellulosic fibres are fed as a fibrous raw material in the form of a fibrous composition, for example an aqueous composition, such as a slurry, a slush, a foam, a dispersion, or a solution. The oleophilic cellulosic and/or lignocellulosic fibres may be fed to a pulping step before a refining step, or to a machine chest after a refining step, or to a head box, or during a web forming step before a drying step.

For example, the product may be a substantially planar product, such as a film, a web or a board, or alternatively a three-dimensional product.

In one embodiment, the product is in the form of a wet-laid fibrous product.

In one embodiment, the product is in the form of an air-laid fibrous product.

In one embodiment, the product is in the form of a foam-formed fibrous product.

In one embodiment, the product is in the form of a moulded fibrous product.

In one embodiment, the product is in the form of a fibrous surface layer that is configured to be attached on a suitable substrate.

In one embodiment, the product is in the form of a three-dimensional structural fibrous product.

The present modified fibres advantageously maintain a sufficient ability to form inter-fibre bonds, for example via hydrogen bonding, with each other and/or with unmodified fibres so that their processing in conventional paper and paperboard making processes is possible.

In one embodiment, the dry grammage of the present product may be at least 20 g/m², for example in the range 30 to 200 g/m², such as 30 to 60 g/m².

In one embodiment, the dry grammage of the present product may be at least 200 g/m², for example 200 to 500 g/m², such as 250 to 350 g/m².

In some embodiments, the product is a multi-layered product, and the oleophilic cellulosic fibres are confined to one or more layers of a multi-layered product, such as to a surface layer or an inner layer of a multi-layered paperboard structure.

It is possible to include the present fibres in several or all fibrous layers of a multi-layer product but with varying ability to interact with oil and grease. All or a part of the fibrous material of any layer may consist of the present fibres. For example, one fibrous layer may exhibit stronger interaction with oil and stronger ability to retard oil permeation than the other layers. Said other fibrous layers may still exhibit an increased ability to retard oil penetration in comparison to layers with completely unmodified fibres.

Further, it is possible to vary the means by which the oil retarding ability is achieved or realized in individual layers of a multi-layer product.

By tailoring the oleophilicity of individual layers it is possible to influence to the location within the fibrous matrix in which the oil retarding function is strongest.

Alternatively, the oleophilic cellulosic fibres may be substantially evenly distributed throughout the structure of the product, such as throughout the structure of a three-dimensional moulded fibrous product.

The present fibres may be mixed with unmodified cellulosic and/or lignocellulosic fibres, and the mixture may be used in manufacturing fibrous products.

Typically, the mixture is used as a fibrous raw material that is fed to a manufacturing process of a fibrous product, for example before carrying out a forming step.

In one embodiment, the mixture comprises oleophilically modified cellulosic fibres and unmodified lignocellulosic fibres.

In one embodiment, the mixture comprises oleophilically modified lignocellulosic fibres and unmodified cellulosic fibres.

In one embodiment, the fibrous composition or the fibrous layer or the fibrous product may comprise at least 1 wt-%, for example at least 10 wt-%, for example at least 20 wt-%, such as at least 50 wt-% oleophilically modified cellulosic and/or lignocellulosic fibres of the total dry matter.

In one embodiment, the fibrous composition or the fibrous layer or the fibrous product may comprise at least 10 wt-%, such as at least 50 wt-%, for example at least 95 wt-% unmodified cellulosic and/or lignocellulosic fibres, calculated from the total dry matter.

The product may be for example a food packaging, such as a fast-food packaging, in which retarding of oil migration through or within the packaging is desirable.

In one embodiment, the fibrous composition may be used in a material of a food serving or packaging or preparing product or a part thereof.

In one embodiment, the fibrous composition may be used in a material of a filtering product or a part thereof.

The present fibres may be used in various paper and paperboard materials, such as packaging materials, specialty papers, and food packagings or wrappings.

The present fibres may also be used in filter products.

In the following we describe exemplary methods for preparing fibres and fibrous compositions according to some embodiments of the present invention.

The method of preparing oleophilic cellulosic and/or lignocellulosic fibres typically comprises the following steps: providing cellulosic and/or lignocellulosic fibres; and modifying the cellulosic and/or lignocellulosic fibres to increase their oleophilicity. As a result of the modification, the modified fibres are capable of retarding oil migration.

Any suitable means may be employed for increasing oleophilicity of the fibres and for introducing and attaching oleophilic functionalities or substances onto the fibres.

The fibres may be pre-treated or activated before the actual modification step. As the modification typically is directed to surfaces of the fibres, it is advantageous to increase the surface area of the fibres or to increase accessibility of the fibre surface to oleophilic compounds or materials before the actual modification step.

In one embodiment, before said modifying step the fibres are pre-treated by swelling the fibres in a solvent or a mixture of solvents. The solvent may be selected for example from the following: deep eutectic solvents, ionic liquids, organic solvents, aqueous sodium hydroxide solutions.

In another embodiment, before said modifying step the fibres are pre-treated by refining or fibrillating the fibres, preferably to increase the surface area of the fibres.

The modifying step may be carried out in a solvent system comprising for example water and/or an ionic liquid and/or a deep eutectic solvent.

After the modification the fibres may be dried.

The drying step is optional. In some embodiments, the modified fibres may be used in further applications, for example in paperboard manufacturing, as such without any drying step.

In one embodiment, the pre-treatment, such as swelling, and the modification are carried out in the same solvent system.

FIGURE 1 shows a process flow chart for producing fibrous products incorporating oleophilic cellulosic and/or lignocellulosic fibres in accordance with an embodiment of the present invention. The process comprises the following steps: providing 10 cellulosic and/or lignocellulosic fibres; modifying 11 the cellulosic and/or lignocellulosic fibres to obtain oleophilic cellulosic and/or lignocellulosic fibres; feeding 12 the obtained oleophilic cellulosic and/or lignocellulosic fibres as a fibrous raw material to a manufacturing process of a fibrous product; and manufacturing 13 the fibrous product 14, 15, 16, 17 by using the oleophilic cellulosic and/or lignocellulosic fibres and optionally other cellulosic and/or lignocellulosic fibres as raw materials. The final fibrous product 14, 15, 16, 17 incorporates the oleophilic cellulosic and/or lignocellulosic fibres, depicted by the dashed areas.

Each of the fibrous products 14, 15, 16, 17 may further comprise unmodified cellulosic and/or lignocellulosic fibres, for example as a mixture with the oleophilic cellulosic and/or lignocellulosic fibres. Said unmodified cellulosic and/or lignocellulosic fibres may be fed as a raw material to the manufacturing step 13. For example, the step 12 may involve preparing a mixture of unmodified cellulosic and/or lignocellulosic fibres and oleophilic cellulosic and/or lignocellulosic fibres, and feeding the obtained mixture as a raw material to the manufacturing step 13. Alternatively, the unmodified cellulosic and/or lignocellulosic fibres may be fed separately, as a separate feed (not shown) to the manufacturing step 13.

In the fibrous product 14, a surface fibrous layer (dashed) of the product has been prepared by using the oleophilic cellulosic and/or lignocellulosic fibres as a fibrous raw material. Optionally, unmodified cellulosic and/or lignocellulosic fibres may be used as a further raw material of the surface layer. The bulk of the product (non-dashed part) may be prepared from unmodified fibres.

In the fibrous product 15, an inner fibrous layer (dashed) of the product has been prepared by using the oleophilic cellulosic and/or lignocellulosic fibres as a fibrous raw material. Optionally, unmodified cellulosic and/or lignocellulosic fibres may be used as a further raw material of the inner layer. The surface layers of the product (non-dashed parts) may be prepared from unmodified fibres.

In the fibrous product 16, the oleophilic cellulosic and/or lignocellulosic fibres have been incorporated in discrete three-dimensional parts or volumes (dashed) within the structure of the fibrous product. Said parts or volumes are located within a fibrous matrix prepared from unmodified fibres. The dashed areas may additionally comprise unmodified cellulosic and/or lignocellulosic fibres as a mixture with the oleophilic cellulosic and/or lignocellulosic fibres.

In the fibrous product 17, the oleophilic cellulosic and/or lignocellulosic fibres have been incorporated throughout the fibrous structure of the fibrous product, optionally as a mixture with unmodified cellulosic and/or lignocellulosic fibres.

### EXAMPLES

### Example 1

In this example wood pulp is either used as such for modification or as a second option the pulp is first fibrillated or as a third option the fibres are swelled in a suitable solvent before modification. The fibres are then modified by a process based on grafting or cross-linking, to impart oleophilicity to the fibres. The obtained modified fibres are used as a fibrous raw material in a papermaking process. The final matrix incorporating the fibres is a paper web. Oil and grease flow through the paper web is slowed down due to interaction between the modified fibres and the oil droplets.

### Example 2

In this example, the reference fibres were unmodified bleached kraft pulp, and the sample fibres were bleached kraft pulp modified with vinyl laurate groups to make them oleophilic. Rapeseed oil was impregnated to the fibres by mixing the oil with the fibres after which the mixture was pressed to form a cake. The amount of oil in the cake after the pressing, i.e. the oil up-take, was determined gravimetrically.

The pressed cake was then placed on a blotting sheet and the amount of oil leaked out during 20 minutes was determined gravimetrically.

Table 1 gives the relative oil up-take, leaked oil and normalized leaked oil values for the reference and for the sample.

It was observed that the sample comprising oleophilically modified fibres retained more oil per dry fibres than the reference. Importantly, leaking of the oil out of the cake proceeded significantly more slowly in the sample comprising oleophilically modified fibres than in the reference.

**Table 1.**

| | Oil up-take g oil / g dry fibre | Leaked oil g leaked oil / g dry fibre | Leaked oil per oil up-take (g leaked oil / g dry fibre) / relative oil up-take |
|---|---|---|---|
| Reference | 2.9 | 0.28 | 0.097 |
| Sample | 2.3 | 0.02 | 0.009 |

### Example 3

This example illustrates behaviour of hydrophobically modified (AKD treated) fibres.

In this Example, the reference fibres were unmodified bleached softwood kraft pulp, and the sample fibres were bleached softwood kraft pulp modified with alkyl ketene dimer (AKD) to make them hydrophobic. Before impregnation, the pulp was dispersed in water according to standardized laboratory methods (EN ISO 5263-1 or 2:04) and the pH was adjusted to 7. Measured amounts of AKD (Aquapel 320, Solenis) were then added to the dispersed pulp to reach AKD contents of 0.05 wt-%, 0.15 wt-%, 0.6 wt-% or 1.2 wt-% on dry mass, followed by making of laboratory paper sheets (140 g/m² dry mass). The laboratory sheets were produced using the standardized method EN ISO 5269- 1:05. Laboratory sheets were thermally treated in an oven at 80°C for 120 min to activate the hydrophobization effect of AKD on the fibre surfaces. Sheets were then immersed in castor oil for 30 min until saturated. After immersion, the sheets were compressed using 1 bar pressure for 1 minute. The amount of oil in the paper sheet after the pressing, i.e. the oil up-take, was determined gravimetrically.

The pressed paper sheet was then placed on a blotting sheet overnight and the amount of oil leaked out was determined gravimetrically.

Table 2 gives the relative oil up-take, leaked oil and normalized leaked oil values for the reference and for the AKD-modified samples. Importantly, despite hydrophobizing by AKD, leaking of the oil out of the paper sheet proceeded similarly as in the reference. SW refers to the reference paper sheet made of unmodified bleached softwood kraft pulp.

**Table 2.**

| Sample / Amount of AKD | Oil uptake g oil / g dry fibre | Leaked oil g oil / g dry fibre | Leaked oil per oil uptake |
|---|---|---|---|
| SW | 0.760 | 0.153 | 0.201 |
| 0.05% | 0.799 | 0.216 | 0.270 |
| 0.15% | 0.808 | 0.194 | 0.240 |
| 0.60% | 0.805 | 0.208 | 0.258 |
| 1.20% | 0.781 | 0.219 | 0.281 |

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The present invention may be industrially applicable at least in materials and products comprising cellulosic and/or lignocellulosic fibres, such as but not limited to paper and paperboard products or moulded fibre products.

### ACRONYMS LIST

- DES: deep eutectic solvent
- IL: ionic liquid
- AKD: alkyl ketene dimer

### CITATION LIST

### Non Patent Literature

Payne K.C. et al., "Oil spills abatement: factors affecting oil uptake by cellulosic fibers", Environ. Sci. Technol. 2012, 46(14), pp. 7725 - 7730.
Wong et al., "Impact of Fiber Treatment on the Oil Absorption Characteristics of Plant Fibers", Bioresources, June 2016, pp. 6452 - 6463.

## Claims

1. Oleophilic cellulosic and/or lignocellulosic fibres, wherein the oleophilic cellulosic and/or lignocellulosic fibres are capable of retarding oil and/or grease migration,
wherein said oleophilic cellulosic and/or lignocellulosic fibres carry oleophilic functional groups.

2. The fibres according to claim 1, wherein:
the oleophilic cellulosic and/or lignocellulosic fibres are in the form of a fibre network or form at least a part of a fibre network, and
said retarding comprises retarding oil migration in said fibre network or said at least part of a fibre network.

3. The fibres according to any of the preceding claims, wherein the fibres have been obtained by modifying cellulosic and/or lignocellulosic fibres, such as wood pulp fibres, to increase their ability to interact with oil and/or attract oil, and wherein said modification is based on covalent bonds, ionic bonds, hydrogen bonds, hydrophobic interactions and/or van der Waals interactions between the oleophilic material and the fibres, preferably the oleophilic functional groups are covalently attached to the fibres.

4. The fibres according to any of the preceding claims, wherein the oleophilic functional groups are selected from the group: hydrocarbons and/or hydrocarbon compounds and/or hydrocarbon derivatives, which may be unsaturated or saturated, straight-chain or branched or cyclic, and may have functional groups, for example vinyl, alcohol, aldehyde, carboxylic acid, halide as well as ionic and or non-ionic functional groups; polymers and their derivatives, such as polyolefins, polyols, polyelectrolytes, polypeptides, polysaccharides and oligomers and/or monomers thereof; low molecular weight compounds, such as amino acids, phenolics, fatty acids, alcohols, for example, glycerol, propylene glycol; organic and inorganic minerals and mineral derivatives, such as calcium carbonate, talc, kaolin, silane, siloxane, chitin or chitosan; and any combinations thereof.

5. A composition comprising the oleophilic cellulosic and/or lignocellulosic fibres according to any of the preceding claims.

6. A product comprising oleophilic cellulosic and/or lignocellulosic fibres according to any of claims 1-4, wherein the oleophilic cellulosic and/or lignocellulosic fibres are capable of retarding oil and/or grease migration.

7. The product according to claim 6, wherein the product is a substantially planar product, such as a film, a web, a sheet, a tissue, a board, or a three-dimensional product, such as a three-dimensional moulded fibrous product, or a substantially one-dimensional product, such as a yarn or a filament.

8. The product according to any of claims 6 to 7, wherein the product is in the form of a wet-laid fibrous product, an air-laid fibrous product, a foam-formed fibrous product, or a moulded fibrous product.

9. The product according to any of claims 6 to 8, wherein the product is a multi-layered product, and the oleophilic cellulosic fibres are confined to one or more layers of a multi-layered product, such as to a surface layer of a multi-layered paperboard structure, or wherein the oleophilic cellulosic and/or lignocellulosic fibres are distributed throughout the structure of the product, such as throughout the structure of a three-dimensional moulded fibrous product.

10. The product according to any of claims 6 to 9, wherein the oil leaking rate from the part of the product incorporating the oleophilic cellulosic and/or lignocellulosic fibres is at least 10%, such as at least 20%, such as at least 30%, for example at least 50% smaller when using the present oleophilic cellulosic and/or lignocellulosic fibres instead of unmodified cellulosic and/or lignocellulosic fibres as the main fibrous component, or as the sole fibrous component, of said part product.

11. A method of preparing oleophilic cellulosic and/or lignocellulosic fibres, the method comprising the following steps:
- providing cellulosic and/or lignocellulosic fibres;
- modifying the cellulosic and/or lignocellulosic fibres to increase their oleophilicity;
wherein the modified fibres are capable of retarding oil and/or grease migration,
wherein said modifying comprises modifying at least part of the fibres by attaching oleophilic functional groups to the fibres.

12. The method according to claim 11, wherein said providing comprises providing cellulosic and/or lignocellulosic wood pulp fibres, preferably in the form of wood pulp from chemical pulping, chemithermomechanical pulping, semi-chemical pulping or mechanical pulping.

13. The method according to any of claims 11 to 12, wherein said modifying comprises covalent and/or non-covalent modification.

14. The method according to any of claims 11 to 13, wherein before said modifying step the fibres are pre-treated by swelling the fibres in a solvent or by fibrillating the fibres, for example to increase the surface area of the fibres.

15. The method according to any of claims 11 to 14, wherein said modifying is carried out in a solvent system comprising water, alkaline substance, acid, ionic liquid, deep eutectic solvent, or organic solvent, or a mixture thereof.

16. A method comprising:
- providing a fibrous raw material comprising oleophilic cellulosic and/or lignocellulosic fibres according to any of the claims 1-4, and optionally unmodified cellulosic and/or lignocellulosic fibres;
- shaping, such as forming, a fibrous structure comprising said fibrous raw material;
- drying said fibrous structure to obtain a fibrous product.

17. The method according to claim 16, wherein said fibrous raw material is in the form of a flowable fibrous raw material, such as a fibrous slurry, a fibrous slush, or a fibrous foam.

18. The method according to claim 16 or 17, wherein said forming comprises wet forming or foam forming, or said forming comprises a paper or paperboard making method.

19. Use of the oleophilic cellulosic and/or lignocellulosic fibres according to any of claims 1 to 4 in a product for food serving, food packaging, food storing or food preparing, or in a fibrous material for manufacturing such a product, or in fibrous packaging or wrappings, non-woven products, textile products, tissue products or filtering products.

## Patentansprüche

1. Oleophile Zellulose- und/oder Lignozellulosefasern, wobei die oleophilen Zellulose- und/oder Lignozellulosefasern in der Lage sind, Öl- und/oder Fettmigration zu verzögern,
wobei die oleophilen Zellulose- und/oder Lignozellulosefasern oleophile funktionelle Gruppen tragen.

2. Fasern nach Anspruch 1, wobei:
die oleophilen Zellulose- und/oder Lignozellulosefasern in der Form eines Fasernetzwerks vorliegen oder zumindest einen Teil eines Fasernetzwerks bilden und
das Verzögern Verzögern der Ölmigration in dem Fasernetzwerk oder zumindest einem Teil des Fasernetzwerks umfasst.

3. Fasern nach einem der vorstehenden Ansprüche, wobei die Fasern durch Modifizieren von Zellulose- und/oder Lignozellulosefasern, wie zum Beispiel Holzstofffasern, erhalten worden sind, um deren Fähigkeit zum Wechselwirken mit Öl und/oder Anziehen von Öl zu erhöhen, und wobei die Modifizierung auf kovalenten Bindungen, ionischen Bindungen, Wasserstoffbrückenbindungen, hydrophoben Wechselwirkungen und/oder Van-der-Waals-Wechselwirkungen zwischen dem oleophilen Material und den Fasern beruht, vorzugsweise die oleophilen funktionellen Gruppen kovalent an die Fasern gebunden sind.

4. Fasern nach einem der vorstehenden Ansprüche, wobei die oleophilen funktionellen Gruppen aus der Gruppe ausgewählt sind: Kohlenwasserstoffe und/oder Kohlenwasserstoffverbindungen und/oder Kohlenwasserstoffderivate, die ungesättigt oder gesättigt, geradkettig oder verzweigt oder zyklisch sein können und funktionelle Gruppen, zum Beispiel Vinyl-, Alkohol-, Aldehyd-, Carbonsäure-, Halogenid- sowie ionische und/oder nichtionische funktionelle Gruppen aufweisen können; Polymere und deren Derivate, wie Polyolefine, Polyole, Polyelektrolyte, Polypeptide, Polysaccharide und Oligomere und/oder Monomere davon; niedermolekulare Verbindungen wie Aminosäuren, Phenole, Fettsäuren, Alkohole, zum Beispiel Glycerin, Propylenglykol; organische und anorganische Mineralien und Mineralderivate wie Calciumcarbonat, Talkum, Kaolin, Silan, Siloxan, Chitin oder Chitosan; und beliebige Kombinationen davon.

5. Zusammensetzung, die die oleophilen Zellulose- und/oder Lignozellulosefasern nach einem der vorstehenden Ansprüche umfasst.

6. Produkt, das oleophile Zellulose- und/oder Lignozellulosefasern nach einem der Ansprüche 1-4 umfasst, wobei die oleophilen Zellulose- und/oder Lignozellulosefasern in der Lage sind, Öl- und/oder Fettmigration zu verzögern.

7. Produkt nach Anspruch 6, wobei das Produkt ein im Wesentlichen ebenes Produkt, wie eine Folie, eine Bahn, ein Blatt, ein Gewebe, eine Platte, oder ein dreidimensionales Produkt, wie ein dreidimensional geformtes Faserprodukt, oder ein im Wesentlichen eindimensionales Produkt, wie ein Garn oder ein Filament ist.

8. Produkt nach einem der Ansprüche 6 oder 7, wobei das Produkt in der Form eines nassgelegten Faserprodukts, eines luftgelegten Faserprodukts, eines schaumgeformten Faserprodukts oder eines geformten Faserprodukts vorliegt.

9. Produkt nach einem der Ansprüche 6 bis 8, wobei das Produkt ein mehrschichtiges Produkt ist und die oleophilen Zellulosefasern auf eine oder mehrere Schichten eines mehrschichtigen Produkts, beispielsweise auf eine Oberflächenschicht einer mehrschichtigen Kartonstruktur, beschränkt sind, oder wobei die oleophilen Zellulose- und/oder Lignozellulosefasern in der gesamten Struktur des Produkts, beispielsweise in der gesamten Struktur eines dreidimensional geformten Faserprodukts, verteilt sind.

10. Produkt nach einem der Ansprüche 6 bis 9, wobei die Ölaustrittsrate aus dem Teil des Produkts, der die oleophile Zellulose- und/oder Lignozellulosefasern enthält, zumindest 10 %, wie zum Beispiel zumindest 20 %, wie zum Beispiel zumindest 30 %, zum Beispiel zumindest 50 % kleiner ist, wenn die vorliegenden oleophilen Zellulose- und/oder Lignozellulosefasern anstelle von unmodifizierten Zellulose- und/oder Lignozellulosefasern als der Hauptfaserbestandteil oder als der einzige Faserbestandteil des Teilprodukts verwendet werden.

11. Verfahren zur Herstellung oleophiler Zellulose- und/oder Lignozellulosefasern, wobei das Verfahren folgende Schritte umfasst:
- Bereitstellen von Zellulose- und/oder Lignozellulosefasern;
- Modifizieren der Zellulose- und/oder Lignozellulosefasern, um deren Oleophilie zu erhöhen;
wobei die modifizierten Fasern in der Lage sind, Öl- und/oder Fettmigration zu verzögern,
wobei die Modifizierung das Modifizieren zumindest eines Teils der Fasern durch Binden oleophiler funktioneller Gruppen umfasst.

12. Verfahren nach Anspruch 11, wobei das Bereitstellen das Bereitstellen von Zellulose- und/oder Lignozellulose-Holzstofffasern, vorzugsweise in der Form von Holzstoff aus chemischem Aufschließen, chemisch-thermomechanischem Aufschließen, halbchemischem Aufschließen oder mechanischem Aufschließen, umfasst.

13. Verfahren nach einem der Ansprüche 11 oder 12, wobei die Modifizierung eine kovalente und/oder nicht-kovalente Modifizierung umfasst.

14. Verfahren nach einem der Ansprüche 11 bis 13, wobei die Fasern vor dem Modifizierungsschritt durch Quellen der Fasern in einem Lösungsmittel oder durch Fibrillieren der Fasern vorbehandelt werden, beispielsweise um die Oberfläche der Fasern zu vergrößern.

15. Verfahren nach einem der Ansprüche 11 bis 14, wobei die Modifizierung in einem Lösungsmittelsystem ausgeführt wird, das Wasser, eine alkalische Substanz, eine Säure, eine ionische Flüssigkeit, ein tiefes eutektisches Lösungsmittel oder ein organisches Lösungsmittel oder eine Mischung davon umfasst.

16. Verfahren, umfassend:
- Bereitstellen eines faserigen Rohmaterials, das oleophile Zellulose- und/oder Lignozellulosefasern nach einem der Ansprüche 1-4 und wahlweise unmodifizierte Zellulose- und/oder Lignozellulosefasern umfasst;
- Formen, wie zum Beispiel Bilden, einer Faserstruktur, die das faserige Rohmaterial umfasst;
- Trocknen der Faserstruktur, um ein Faserprodukt zu erhalten.

17. Verfahren nach Anspruch 16, wobei das faserige Rohmaterial in der Form eines fließfähigen faserigen Rohmaterials, wie zum Beispiel einer faserigen Suspension, eines faserigen Breis oder eines faserigen Schaums, vorliegt.

18. Verfahren nach Anspruch 16 oder 17, wobei das Bilden Nassbilden oder Schaumbilden umfasst oder wobei das Bilden ein Papier- oder Kartonherstellungsverfahren umfasst.

19. Verwendung der oleophilen Zellulose- und/oder Lignozellulosefasern nach einem der Ansprüche 1 bis 4 in einem Produkt zum Nahrungsmittelservieren, Nahrungsmittelverpacken, Nahrungsmittelaufbewahren oder Nahrungsmittelzubereiten oder in einem Fasermaterial zum Herstellen eines solchen Produkts oder in Faserverpackungen oder -hüllen, Vliesstoffen, Textilprodukten, Gewebeprodukten oder Filterprodukten.

## Revendications

1. Fibres oléophiles cellulosiques et/ou lignocellulosiques, dans lesquelles les fibres oléophiles cellulosiques et/ou lignocellulosiques sont capables de retarder la migration de l'huile et/ou de la graisse,
dans lesquelles lesdites fibres oléophiles cellulosiques et/ou lignocellulosiques possèdent des groupes fonctionnels oléophiles.

2. Fibres selon la revendication 1, dans lesquelles :
les fibres oléophiles cellulosiques et/ou lignocellulosiques se présentent sous la forme d'un réseau de fibres ou forment au moins une partie d'un réseau de fibres, et
ledit retardement comprend le retardement de la migration de l'huile dans ledit réseau de fibres ou dans au moins une partie du réseau de fibres.

3. Fibres selon l'une quelconque des revendications précédentes, dans lesquelles les fibres ont été obtenues par modification des fibres cellulosiques et/ou lignocellulosiques, telles que des fibres de pâte de bois, pour accroître leur capacité à interagir avec de l'huile et/ou attirer de l'huile, et dans lesquelles ladite modification est basée sur des liaisons covalentes, des liaisons ioniques, des liaisons hydrogène, des interactions hydrophobes et/ou des interactions de van der Waals entre le matériau oléophile et les fibres, de préférence les groupes fonctionnels oléophiles sont liés de manière covalente aux fibres.

4. Fibres selon l'une quelconque des revendications précédentes, dans lesquelles les groupes fonctionnels oléophiles sont choisis dans le groupe : des hydrocarbures et/ou des composés hydrocarbonés et/ou des dérivés d'hydrocarbures, qui peuvent être insaturés ou saturés, à chaîne linéaire ou ramifiée ou cyclique, et qui peuvent comporter des groupes fonctionnels, par exemple vinyle, alcool, aldéhyde, acide carboxylique, halogénure ainsi que des groupes fonctionnels ioniques et/ou non ioniques ; des polymères et leurs dérivés, tels que des polyoléfines, des polyols, des polyélectrolytes, des polypeptides, des polysaccharides et des oligomères et/ou des monomères de ceux-ci ; des composés de faible poids moléculaire, tels que des acides aminés, des composés phénoliques, des acides gras, des alcools, par exemple le glycérol, le propylène glycol ; des minéraux organiques et inorganiques et des dérivés minéraux, tels que le carbonate de calcium, le talc, le kaolin, le silane, le siloxane, la chitine ou le chitosane ; et toute combinaison de ceux-ci.

5. Composition comprenant les fibres oléophiles cellulosiques et/ou lignocellulosiques selon l'une quelconque des revendications précédentes.

6. Produit comprenant des fibres oléophiles cellulosiques et/ou lignocellulosiques selon l'une quelconque des revendications 1-4, dans lequel les fibres oléophiles cellulosiques et/oulignocellulosiques sont capables de retarder la migration de l'huile et/ou de la graisse.

7. Produit selon la revendication 6, dans lequel le produit est un produit sensiblement plan, tel qu'un film, une bande, une feuille, un tissu, une plaque, ou un produit tridimensionnel, tel qu'un produit fibreux moulé tridimensionnel, ou un produit sensiblement unidimensionnel, tel qu'un fil ou un filament.

8. Produit selon l'une quelconque des revendications 6 à 7, dans lequel le produit se présente sous la forme d'un produit fibreux humide, d'un produit fibreux par voie sèche, d'un produit fibreux formé de mousse ou d'un produit fibreux moulé.

9. Produit selon l'une quelconque des revendications 6 à 8, dans lequel le produit est un produit multicouche et les fibres oléophiles cellulosiques sont confinées à une ou plusieurs couches d'un produit multicouche, telles qu'une couche superficielle d'une structure en carton multicouche, ou dans lequel les fibres oléophiles cellulosiques et/ou lignocellulosiques sont réparties dans toute la structure du produit, par exemple dans toute la structure d'un produit fibreux moulé en trois dimensions.

10. Produit selon l'une quelconque des revendications 6 à 9, dans lequel le taux de fuite d'huile de la partie du produit incorporant les fibres oléophiles cellulosiques et/ou lignocellulosiques sont au moins 10 %, comme au moins 20 %, comme au moins 30 %, par exemple, au moins 50 % plus petit lors de l'utilisation des fibres oléophiles cellulosiques et/ou lignocellulosiques au lieu de fibres cellulosiques et/ou lignocellulosiques non modifiées comme principal composant fibreux, ou comme unique composant fibreux, dudit produit partiel.

11. Procédé de préparation de fibres oléophiles cellulosiques et/ou lignocellulosiques, le procédé comprenant les étapes suivantes :
- la fourniture de fibres cellulosiques et/ou lignocellulosiques ;
- la modification des fibres cellulosiques et/ou lignocellulosiques pour augmenter leur oléophilie ;
dans lequel les fibres modifiées sont capables de retarder la migration de l'huile et/ou de la graisse,
dans lequel ladite modification comprend la modification d'au moins une partie des fibres en attachant des groupes fonctionnels oléophiles aux fibres.

12. Procédé selon la revendication 11, dans lequel ladite fourniture de fibres de pâte de bois cellulosiques et/ou lignocellulosiques, de préférence sous la forme de pâte de bois issue d'une réduction en pâte chimique, d'une réduction en pâte chimico-thermo-mécanique, d'une réduction en pâte semi-chimique ou d'une réduction en pâte mécanique.

13. Procédé selon l'une quelconque des revendications 11 à 12, dans lequel ladite modification comprend une modification covalente et/ou non covalente.

14. Procédé selon l'une quelconque des revendications 11 à 13, dans lequel, avant ladite étape de modification, les fibres sont prétraitées par gonflement des fibres dans un solvant ou par fibrillation des fibres, par exemple pour augmenter la surface des fibres.

15. Procédé selon l'une quelconque des revendications 11 à 14, dans lequel ladite modification est effectuée dans un système de solvant comprenant de l'eau, une substance alcaline, un acide, un liquide ionique, un solvant eutectique profond ou un solvant organique, ou un mélange de ceux-ci.

16. Procédé comprenant :
- la fourniture d'une matière première fibreuse comprenant des fibres oléophiles cellulosiques et/ou lignocellulosiques selon l'une quelconque des revendications 1-4 et, facultativement, des fibres cellulosiques et/ou lignocellulosiques non modifiées ;
- la mise en forme, comme la formation d'une structure fibreuse comprenant ladite matière première fibreuse ;
- le séchage de ladite structure fibreuse pour obtenir un produit fibreux.

17. Procédé selon la revendication 16, dans lequel ladite matière première fibreuse se présente sous la forme d'une matière première fibreuse fluide, telle qu'une boue fibreuse, une bouillie fibreuse ou une mousse fibreuse.

18. Procédé selon la revendication 16 ou 17, dans lequel ladite formation comprend une formation par voie humide ou une formation de mousse, ou ladite formation comprend un procédé de fabrication de papier ou de carton.

19. Utilisation des fibres oléophiles cellulosiques et/ou lignocellulosiques selon l'une quelconque des revendications 1 à 4 dans un produit pour un service d'aliments, l'emballage d'aliments, le stockage d'aliments ou la préparation d'aliments, ou dans un matériau fibreux pour fabriquer un tel produit, ou dans un emballage fibreux ou des enveloppes fibreuses, des produits non tissés, des produits textiles, des produits de tissu ou des produits de filtration.
